# EUROPEAN PATENT APPLICATION

(11) **EP 3 517 778 A1**
(43) Date of publication of application: **31.07.2019**
(21) Application number: 19153434.6
(22) Date of filing: 24.01.2019
(51) Int. Cl.: F03G 7/10

(54) **POWER PRODUCING APPARATUS**

(30) Priority: 25.01.2018 TW 10702634
(71) Applicant: Hsu, Po-Jiy, Kaohsiung City, Taiwan 806 (TW)
(72) Inventor: HSU, Po-Jiy, 806 Taiwan (TW); HSU CHU, Yu-Lien, 806 Taiwan (TW); HSU, Yi-Ping, 806 Taiwan (TW); HSU, Ting-Chen, 806 Taiwan (TW); HSU, Chia-Ming, 806 Taiwan (TW)
(74) Representative: Whitfield, Ian

(57) **Abstract**

An apparatus for driving an electric generating device (4) includes a support unit (2) having two posts (21, 22), an axle (23) mounted between the posts (21, 22), a flywheel unit (31), and a power unit (5). The flywheel unit (31) includes a flywheel (311) mounted on the axle (23), and a weight member (312) mounted on the flywheel (311) to rotate with the flywheel (311) along a cyclic route (300). The power unit (5) includes a drive motor (51) with an output shaft (53), an output gear (54) configured to mesh with the flywheel (311), and a controller (52) coupled to the drive motor (51) to set the output shaft (53) to work in a drive or driven phase so as to cause the weight member (312) to continuously move along the cyclic route (300).

## Description

The disclosure relates to a power producing apparatus, more particularly to a power producing apparatus for driving an electric generating device.

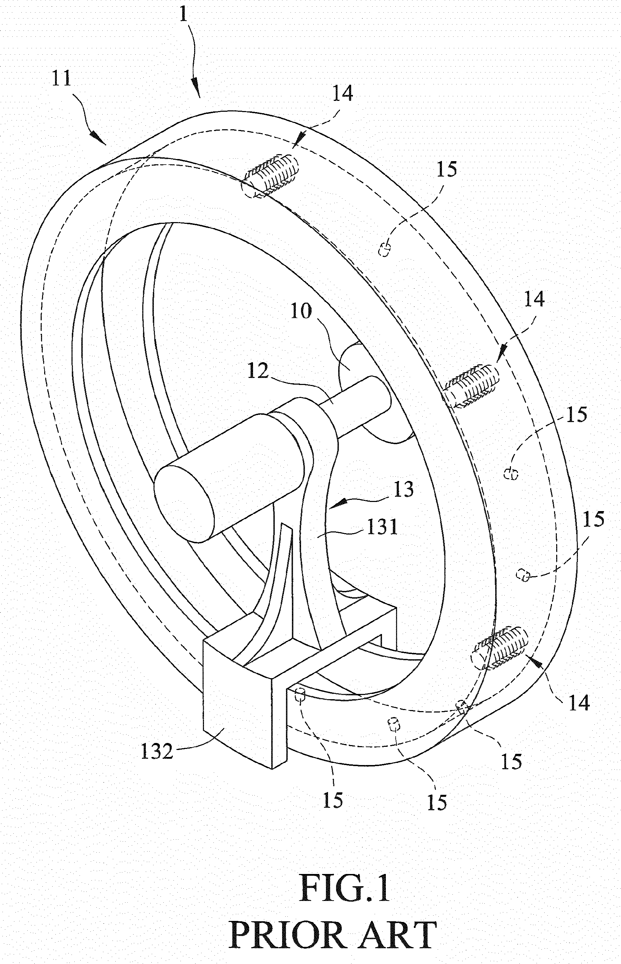

Taiwanese patent publication No. 1500243, corresponding to European counterpart patent application publication No. 2949928A1 discloses a conventional driving device for driving an electric generator. As shown in Fig. 1, the conventional driving device 1 includes a circular frame 11, a rotating shaft 12, a rotation unit 13, a plurality of electromagnetic units 14, and a plurality of sensing members 15. The rotating shaft 12 extends to be surrounded by the circular frame 11, and is coupled for driving the electric generator 10. The rotation unit 13 includes a magnetically attractive member 132 slidably mounted on the circular frame 11, and a rod member 131 interconnecting the magnetically attractive member 132 and the rotating shaft 12 so as to permit the rotating shaft 12 to be driven to rotate in response to the sliding movement of the magnetically attractive member 132. Each of the sensing members 15 is provided to detect passing of the magnetically attractive member 132. In response to the positions of the magnetically attractive member 132, a corresponding one of the electromagnetic units 14 is controlled to turn on or to turn off so as to provide or cease providing an attractive force to the magnetically attractive member 132, thereby keeping the magnetically attractive member 132 continuously sliding on the circular frame 11. The continuous sliding movement of the magnetically attractive member 132 can be transmitted for driving the electric generator 10 through the rotating shaft 12 and the rod member 131.

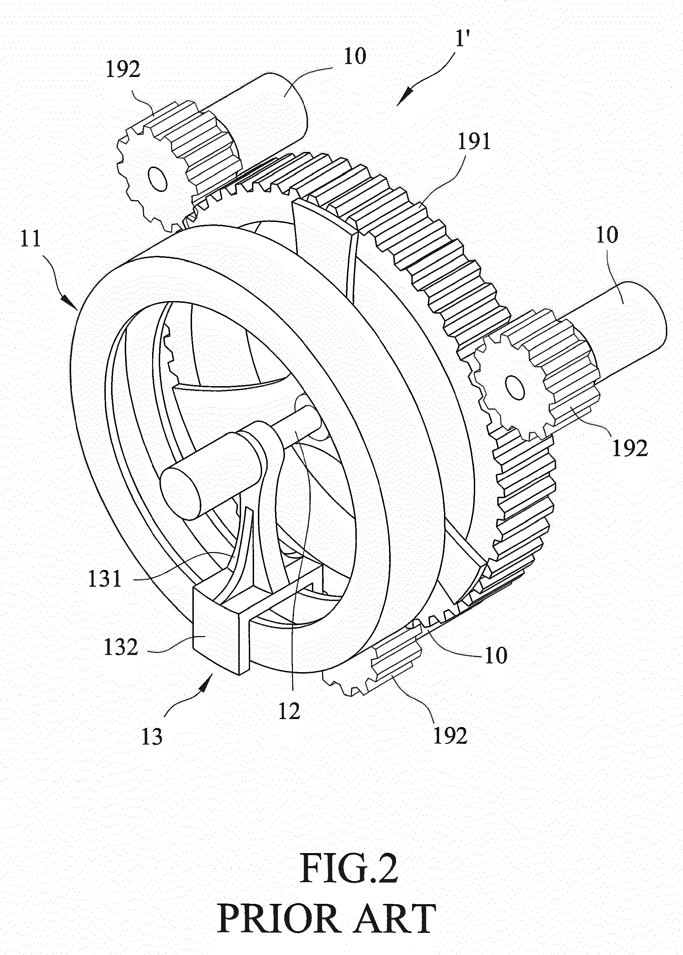

In Fig. 2, another conventional driving device 1' is provided for driving three electric generators 10. Compared to the convention driving device 1, the conventional driving device 1' further includes a flywheel 191 and three pinion gears 192. The flywheel 191 is mounted on the rotating shaft 12 to rotate therewith. Each of the pinion gears 192 is coupled between the flywheel 191 and a respective one of the electric generators 10. As such, in response to the continuous sliding movement of the magnetically attractive member 132, the flywheel 191 is driven to rotate continuously, thereby driving the three electric generators 10 to generate electricity.

An object of the disclosure is to provide a novel power producing apparatus for driving an electric generating device. The novel power producing apparatus may be controlled easily, and has a relatively simple configuration. In addition, with the provision of the novel power producing apparatus, stable and continuous electricity supply from the electric generating device may be achieved in a simple and high efficient manner.

According to the disclosure, a power producing apparatus for driving an electric generating device includes a support unit, an axle, a flywheel unit, and at least one power unit. The support unit includes a first post and a second post, which are spaced apart from each other in an axial direction. Each of the first and second posts has a rest region and a mounting region opposite to the rest region in an upright direction. The axle extends along an axial axis in the axial direction to terminate at two axle ends which are mounted to the mounting regions of the first and second posts, respectively. The flywheel unit includes a flywheel and a weight member. The flywheel has a wheel hub which is mounted on the axle to be rotatable relative to the support unit about the axial axis, and a wheel body which has a wheel rim with a toothed surface. The flywheel is further coupled for driving the electric generating device. The weight member is mounted on the wheel body to rotate with the flywheel along a cyclic route which includes a gravity-driven zone that starts from the highest position of the cyclic route, and a torque-driven zone that starts from the lowest position of the cyclic route or therebeyond to terminate at the highest position. The power unit includes a drive motor, an output gear, and a controller. The drive motor has an output shaft which extends along a shaft axis to terminate at an output end, and which works in a drive phase where a drive torque is delivered, or in a driven phase where no torque is given out. The output gear is mounted on the output end, and is configured to mesh with the toothed surface of the flywheel. The controller is coupled to the drive motor to set the output shaft to work in either one of the drive and driven phases. Once a gravity center of the weight member starts to move into the gravity-driven zone, the output shaft is set to work in the driven phase so as to permit the output shaft to be driven by the flywheel through the output gear. Once the gravity center of the weight member starts to move into the torque-driven zone, the output shaft is set to work in the drive phase to permit the flywheel to be driven by the drive torque through the output gear, thereby allowing the weight member to continuously move along the cyclic route.

Other features and advantages of the disclosure will become apparent in the following detailed description of the embodiment (s) with reference to the accompanying drawings, in which:
Fig. 1 is a perspective view of a conventional driving device for driving an electric generator;
Fig. 2 is a perspective view of another conventional driving device for driving two electric generators;
Fig. 3 is an exploded perspective view of a power producing apparatus according to a first embodiment of the disclosure;
Fig. 4 is a perspective view of the power producing apparatus of Fig. 3 in an assembled state;
Fig. 5 is a side view of the power producing apparatus of Fig. 4, illustrating a weight member in a midway position;
Fig. 6 is similar to Fig. 5 but illustrating the weight member in a lowest position; and
Fig. 7 is a perspective view of a power producing apparatus according to a second embodiment of the disclosure.

Before the disclosure is described in greater detail, it should be noted that where considered appropriate, reference numerals have been repeated among the figures to indicate corresponding or analogous elements, which may optionally have similar characteristics.

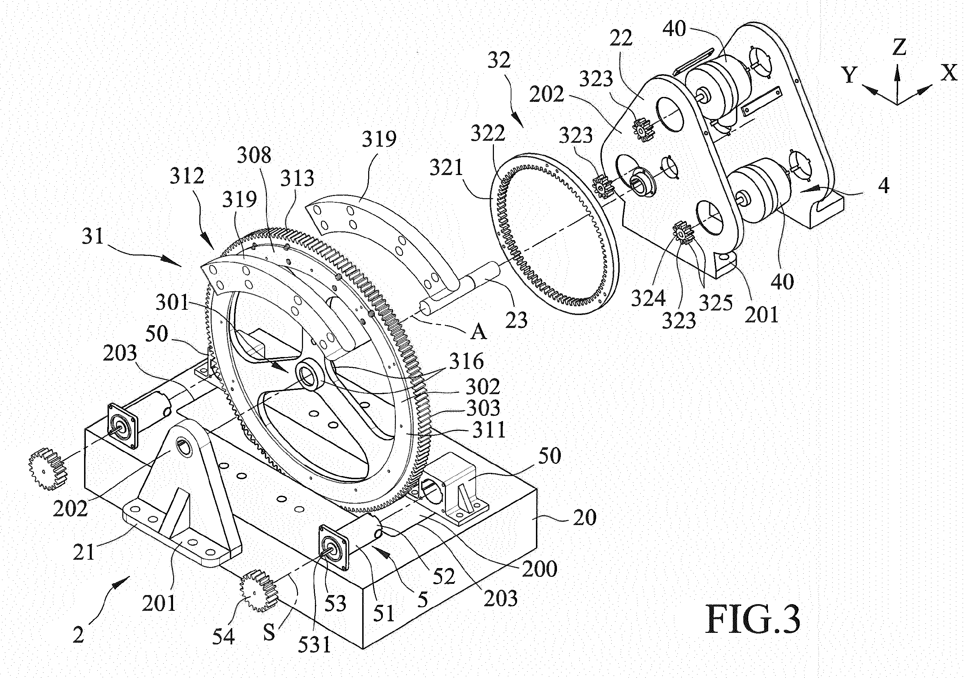

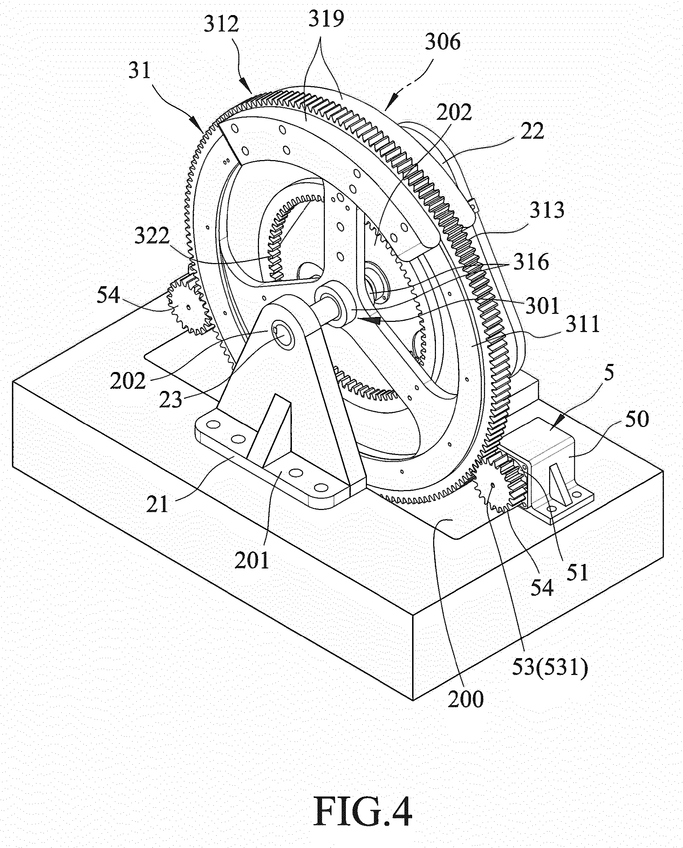

Referring to Figs. 3 and 4, a power producing apparatus for driving an electric generating device 4 according to a first embodiment is shown to include a support unit 2, an axle 23, a flywheel unit 31, and at least one power unit 5. It should be noted that the power producing apparatus is workable only if it is placed in a gravitational field.

The support unit 2 includes a first post 21 and a second post 22, which are spaced apart from each other in an axial direction (X) . Each of the first and second posts 21, 22 has a rest region 201 and a mounting region 202 opposite to the rest region 201 in an upright direction (Z).

In an embodiment shown in Fig. 3, the support unit 2 further includes a base plate 20 formed with a slot 200 which extends in the upright direction (Z) through the base plate 20, and which extends in a transverse direction (Y) relative to the axial direction (X) to terminate at two slot ends 203. The rest regions 201 of the first and second posts 21, 22 are mounted on the base plate 20 at two opposite side of the slot 200.

The axle 23 extends along an axial axis (A) in the axial direction (X) to terminate at two axle ends which are mounted to the mounting regions 202 of the first and second posts 21, 22, respectively.

The flywheel unit 31 includes a flywheel 311 and a weight member 312.

The flywheel 311 has a wheel hub 301 and a wheel body 302. The wheel hub 301 is mounted on the axle 23 to be rotatable relative to the support unit 2 about the axial axis (A). The wheel body 302 has a wheel rim 303 with a toothed surface 313. The flywheel 311 is further coupled for driving the electric generating device 4. In an embodiment shown in Figs. 3 and 4, two bearing members 316 may be respectively provided at two opposite sides of the flywheel 311 to serve as a portion of the wheel hub 301 so as to permit the flywheel 311 to rotate relative to the axle 23 in a stable and smooth manner.

In an embodiment shown in Fig. 3, the wheel body 302 has an outer circumferential segment 308 in proximity to the wheel rim 303.

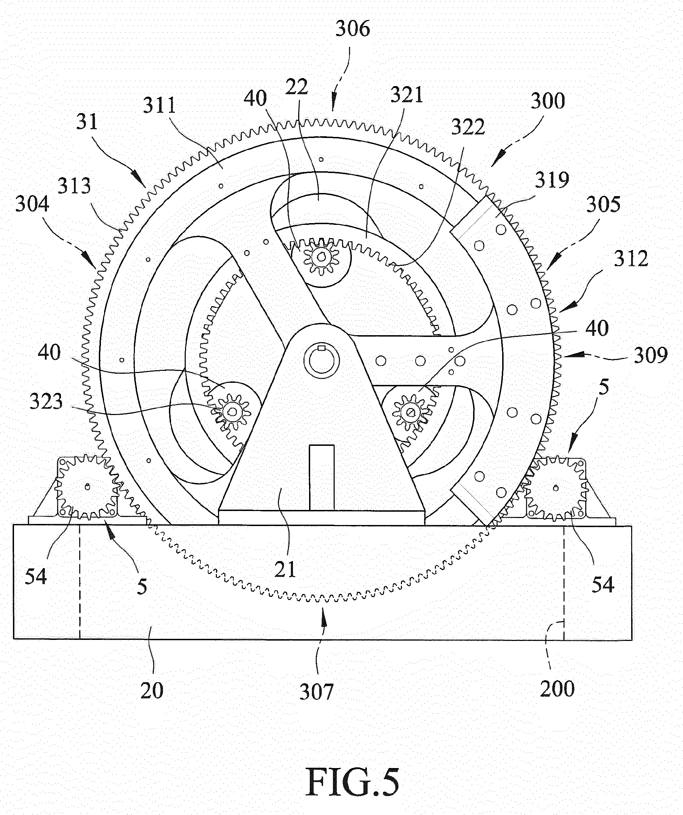

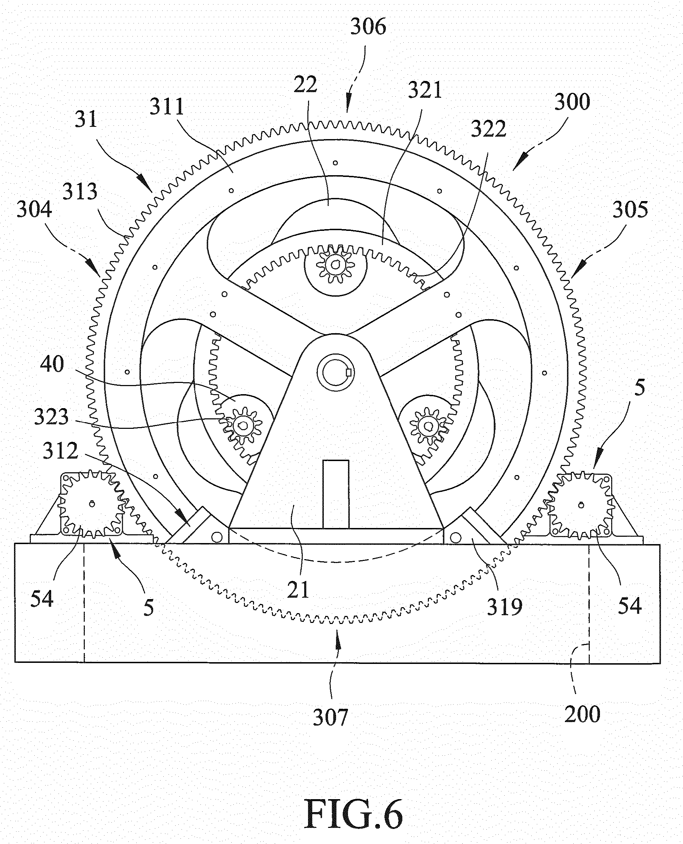

The weight member 312 is mounted on the wheel body 301 to rotate with the flywheel 311 along a cyclic route 300 including a gravity-driven zone 304 and a torque-driven zone 305. As shown in Figs. 5 and 6, the gravity-driven zone 304 starts from the highest position 306 of the cyclic route 300, and the torque-driven zone 305 starts from the lowest position 307 of the cyclic route 300 or therebeyond to terminate at the highest position 306. In the gravity-driven zone 304, the flywheel 311 is driven by the weight member 312 to rotate by converting a potential energy of the weight member 312 at the highest position 306 into a rotational kinetic energy of the flywheel unit 31.

In an embodiment, the torque-driven zone 305 starts from the lowest position 307 of the cyclic route 300 to terminate at the highest position 306.

In an embodiment, the flywheel 311 is mounted on the axle 23 to permit a gravity center of the weight member 312 to move into the slot 200 for reaching the lowest position 307 of the cyclic route 300. In this case, a gravity center of the flywheel unit 31 can be lowered and rotation of the flywheel unit 31 may be further stabilized.

In an embodiment shown in Fig. 3, the weight member 312 is mounted to the outer circumferential segment 308.

The configuration of the weight member 312 may be varied based on requirements. In an embodiment shown in Fig. 3, the weight member 312 includes two weight halves 319 which are configured to sandwich the outer circumferential segment 308. In addition, the weight halves 319 fully overlap each other, with the outer circumferential segment 308 interposed therebetween so as to stabilize the rotation of the flywheel unit 31.

The power unit 5 includes a drive motor 51, a controller 52, and an output gear 54.

The drive motor 51 has an output shaft 53 which extends along a shaft axis (S) parallel to the axial axis (A) to terminate at an output end 531, and which works in a drive phase, where a drive torque is delivered, or in a driven phase, where no torque is given out.

The output gear 54 is mounted on the output end 531, and is configured to mesh with the toothed surface 313 of the flywheel 311.

The controller 52 is coupled to the drive motor 51 to set the output shaft 53 to work in either one of the drive and driven phases . Once the gravity center of the weight member 312 starts to move into the gravity-driven zone 304, the output shaft 53 is set to work in the driven phase so as to permit the output shaft 53 to be driven by the flywheel 311 through the output gear 54. Once the gravity center of the weight member 312 starts to move into the torque-driven zone 305, the output shaft 53 is set to work in the drive phase to permit the flywheel 311 to be driven by the drive torque through the output gear 54, thereby allowing the weight member 312 to continuously move along the cyclic route 300 and allowing the flywheel 311 to rotate at a constant rotational speed.

In an embodiment shown in Figs. 3 and 4, the controller 52 and the drive motor 51 are integrally formed.

In an embodiment, the output shaft 53 is controlled by the controller 52 to provide different values of the drive torque when the gravity center of the weight member 312 is at the lowest position 307 (Fig. 6), the highest position 306 (Fig. 4), and a midway position 309 (Fig. 5) between the lowest position 307 and the highest position 306.

In an embodiment, the output shaft 53 is controlled to provide a smallest value, a middle value, and a largest value of the drive torque when the gravity center of the weight member 312 is at the lowest position 307, the midway position 309, and the highest position 306, respectively. As such, the flywheel 311 may be rotated in a more stable and smooth manner, and stable and continuous electricity supply from the electric generating device 4 may be achieved.

In an embodiment shown in Figs. 3 and 4, a motor housing 50 is mounted on the base plate 20, and is configured for receiving the drive motor 51 and the controller 52 therein.

In an embodiment shown in Figs. 3 to 6, two of the power units 5 are mounted on the base plate 20 in positions corresponding to the slot ends 203, respectively.

In an embodiment shown in Figs. 3 to 6, the power producing apparatus further includes a force-transmission gear unit 32 configured to couple the flywheel 311 with the electric generating device 4 so as to permit rotational force of the flywheel unit 31 to be transmitted to the electric generating device 4.

In an embodiment shown in Figs. 3 to 6, the transmission gear unit 32 includes an annular gear 321 and at least one pinion gear 323.

The annular gear 321 is mounted to the wheel body 302 between the wheel hub 301 and the weight member 312 to rotate with the flywheel 311, and has an inner annular toothed surface 322.

The pinion gear 323 includes a first central region 324 for driving the electric generating device 4, and an outer gear surface 325 configured to mesh with the inner annular toothed surface 322 so as to transmit the rotational force of the flywheel unit 31 to the electric generating device 4.

In an embodiment shown in Figs. 3, 5, and 6, three of the pinion gears 323 are provided, and the electric generating device 4 includes three electric generators 40 which are respectively driven by the pinion gears 323 for generating electricity.

In addition, a first distance is defined between the axle 23 and the output gear 54 of each power unit 5, and a second distance is defined between the axle 23 and each pinion gear 323. A ratio of the first distance to the second distance may be controlled for enhancing the working efficiency of the power units 5.

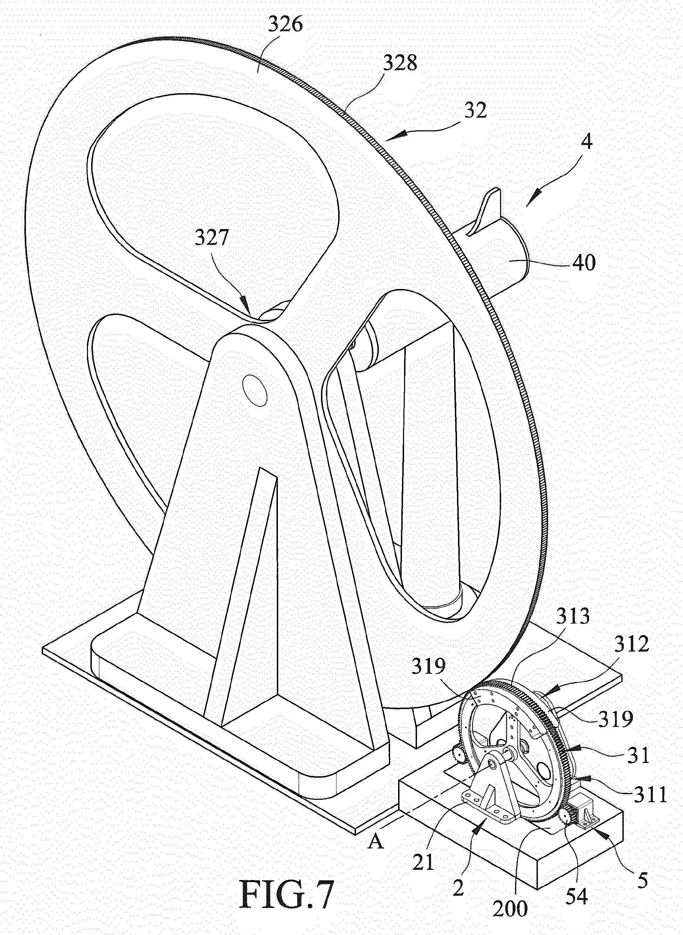

Fig. 7 illustrates a power producing apparatus according to a second embodiment of the disclosure. The second embodiment is similar to the first embodiment, except that in the second embodiment, the transmission gear unit 32 includes a wheel gear 326 having a second central region 327 for driving the electric generating device 4, and a toothed rim surface 328. The toothed rim surface 328 is configured to mesh with the toothed surface 313 of the flywheel 311 at a position angularly displaced from the output gear 54 about the axial axis (A) so as to permit the rotational force of the flywheel unit 31 to be transmitted to the electric generating device 4. In addition, in this embodiment, the electric generating device 4 includes an electric regenerator 40.

In other embodiments, the power producing apparatus of the second embodiment may be used in a wind driven electric generator.

In the description above, for the purposes of explanation, numerous specific details have been set forth in order to provide a thorough understanding of the embodiment (s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure . It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A power producing apparatus for driving an electric generating device (4), **characterized by** comprising:
a support unit (2) including a first post (21) and a second post (22), which are spaced apart from each other in an axial direction (X), each of said first and second posts (21, 22) having a rest region (201) and a mounting region (202) opposite to said rest region (201) in an upright direction (Z);
an axle (23) extending along an axial axis (A) in the axial direction (X) to terminate at two axle ends which are mounted to said mounting regions (202) of said first and second posts (21, 22), respectively;
a flywheel unit (31) including
a flywheel (311) having a wheel hub (301) which is mounted on said axle (23) to be rotatable relative to said support unit (2) about the axial axis (A), and a wheel body (302) which has a wheel rim (303) with a toothed surface (313), said flywheel (311) being further coupled for driving the electric generating device (4); and
a weight member (312) mounted on said wheel body (301) to rotate with said flywheel (311) along a cyclic route (300) which includes a gravity-driven zone (304) that starts from the highest position (306) of the cyclic route (300), and a torque-driven zone (305) that starts from the lowest position (307) of the cyclic route (300) or therebeyond to terminate at the highest position (306); and
at least one power unit (5) including
a drive motor (51) with an output shaft (53) which extends along a shaft axis (S) to terminate at an output end (531), and which works in a drive phase where a drive torque is delivered, or in a driven phase where no torque is given out,
an output gear (54) which is mounted on said output end (531), and which is configured to mesh with said toothed surface (313) of said flywheel (311), and
a controller (52) coupled to said drive motor (51) to set said output shaft (53) to work in either one of the drive and driven phases such that once a gravity center of said weight member (312) starts to move into the gravity-driven zone (304), said output shaft (53) is set to work in the driven phase so as to permit said output shaft (53) to be driven by said flywheel (311) through said output gear (54), and such that once the gravity center of said weight member (312) starts to move into the torque-driven zone (305), said output shaft (53) is set to work in the drive phase to permit said flywheel (311) to be driven by the drive torque through said output gear (54), thereby allowing said weight member (312) to continuously move along the cyclic route (300).

2. The power producing apparatus according to claim 1, further **characterized by** a force-transmission gear unit (23) configured to couple said flywheel (311) with the electric generating device (4) so as to permit rotational force of said flywheel unit (31) to be transmitted to the electric generating device (4) .

3. The power producing apparatus according to claim 2, **characterized in that** said transmission gear unit (32) includes
an annular gear (321) which is mounted to said wheel body (302) between said wheel hub (301) and said weight member (312) to rotate with said flywheel (311), and which has an inner annular toothed surface (322), and
at least one pinion gear (323) including a first central region (324) for driving the electric generating device (4), and an outer gear surface (325) configured to mesh with said inner annular toothed surface (322) so as to transmit the rotational force of said flywheel unit (31) to the electric generating device (4).

4. The power producing apparatus according to claim 2, **characterized in that** said transmission gear unit (32) includes a wheel gear (326) having
a second central region (327) for driving the electric generating device (4), and
a toothed rim surface (328) which is configured to mesh with said toothed surface (313) of said flywheel (311) at a position angularly displaced from said output gear (54) about the axial axis (A) so as to permit the rotational force of said flywheel unit (31) to be transmitted to the electric generating device (4).

5. The power producing apparatus according to anyone of claims 1 to 4, **characterized in that** said wheel body (302) has an outer circumferential segment (308) in proximity to said wheel rim (303), said weight member (312) being mounted to said outer circumferential segment (308) .

6. The power producing apparatus according to claim 5, **characterized in that** said weight member (312) includes two weight halves (319) configured to sandwich said outer circumferential segment (308).

7. The power producing apparatus according to anyone of claims 1 to 6, **characterized in that**
said support unit (2) further including a base plate (20) formed with a slot (200) which extends in the upright direction (Z) through said base plate (20), and which extends in a transverse direction (Y) relative to the axial direction (X), and
said rest regions (201) of said first and second posts (21, 22) are mounted on said base plate (20) at two opposite side of said slot (200) to permit the gravity center of said weight member (312) to move into said slot (200) for reaching the lowest position (307) of the cyclic route (300).

8. The power producing apparatus according to anyone of claims 1 to 7, wherein said torque-driven zone (305) starts from the lowest position (307) of the cyclic route (300).

9. The power producing apparatus according to claim 8, **characterized in that** said output shaft (53) is controlled by said controller (52) to provide different values of the drive torque when the gravity center of said weight member (312) is at the lowest position (307), the highest position (306), and a midway position (309) between the lowest position (307) and the highest position (306).

10. The power producing apparatus according to claim 9, **characterized in that** said output shaft (53) is controlled to provide a smallest value, a middle value, and a largest value of the drive torque when the gravity center of said weight member (312) is at the lowest position (307), the midway position (309), and the highest position (306), respectively.
